# EUROPEAN PATENT SPECIFICATION

(11) **EP 4 503 246 B1**
(45) Date of publication and mention of the grant of the patent: **04.11.2026**
(21) Application number: 23856172.4
(22) Date of filing: 02.06.2023
(51) Int. Cl.: H01M 10/0587, H01M 10/0525

(54) **WOUND CORE AND BATTERY**
WICKELKERN UND BATTERIE
NOYAU ENROULÉ ET BATTERIE

(30) Priority: 23.08.2022 CN 202222216587 U
(43) Date of publication of application: 05.02.2025
(73) Proprietor: Zhuhai CosMX Battery Co., Ltd., Zhuhai, Guangdong 519180 (CN)
(72) Inventor: YAO, Yixin, Zhuhai, Guangdong 519180 (CN); ZHANG, Wenxuan, Zhuhai, Guangdong 519180 (CN); ZHANG, Honglei, Zhuhai, Guangdong 519180 (CN); LI, Junyi, Zhuhai, Guangdong 519180 (CN)
(74) Representative: Murgitroyd & Company
(86) International application number: PCT/CN2023/098034
(87) International publication number: WO 2024/041080

(56) References cited:
- CN-U- 208 078 114
- CN-U- 208 078 114
- CN-U- 216 850 053
- CN-U- 218 602 515
- JP-A- 2011 165 670
- US-A1- 2021 376 372
- US-A1- 2021 376 372

## Description

### TECHNICAL FIELD

The present application relates to the field of battery technologies, and in particular, to a jelly roll and a battery.

### BACKGROUND

Since a battery is commercialized, the battery has been widely used in the fields of portable electronic products, new energy vehicles and the like due to its excellent electrochemical performance, low self-discharge, ability to be rapidly charged and discharged, high energy density and the like.

A battery is composed of a positive electrode plate, a negative electrode plate, a separator, an electrolyte, etc. Due to organic and flammable nature of the electrolyte and poor thermal stability of a positive electrode material, when a nail penetration test is performed, a short circuit occurs instantaneously between the positive and negative electrodes of the battery, thereby leading to a large amount of Joule heat. When heat accumulates to a certain degree, a chemical reaction is triggered, thereby leading to chemical heat, and accumulation of the heat may lead to thermal runaway, and in severe cases, the accumulation of the heat may cause a battery to fire or even explode.
JP2011165670A provides a winding device and a winding method. The winding device includes a winding core having a slit, configured so that a positive electrode foil and a negative electrode foil are wound up in an insulated state with a strip-shaped separator interposed therebetween by rotation of the winding core. The winding device includes: a first guiding means for guiding both separators and one of the electrode foils into the slit of the winding core so that one of the electrode foils does not protrude beyond the tip ends of two separators and so that the one of the electrode foils is sandwiched between the two separators; a preliminary winding means for rotating the winding core a predetermined angle to wind up the guided two separators and one of the electrode foils to an extent that they do not shift position; a second guiding means for guiding the other electrode foil so that it is sandwiched between the two separators in the middle of winding; and a main winding means for winding up the two separators and both of the electrode foils by rotating the winding core a predetermined number of times.
CN208078114U provides a battery including: a housing. The electricity core sets up in the casing, the conducting strip sets up between electric core and casing, wherein electric core includes first electrode and second electrode, and an electrode package draws together the first mass flow body and a active material layer, and the 2nd electrode package draws together the secondmass flow body and the 2nd active material layer, the electricity core includes still that first empty paper tinsel distinguishes relatively, and the first mass flow body is including first empty paper tinsel district, and the surface in first empty paper tinsel district does not set up a active material layer, and the 2nd electrode package draws together the empty paper tinsel district of second, and the surface in the empty paper tinsel district of second does not set up the 2nd active material layer, and first empty paper tinsel district forms first empty paper tinsel towards second emptypaper tinsel district and distinguishes relatively, wherein, along utmost point ear thickness direction, on the plane at conducting strip place, the projection in the first empty relative district of paper tinsel and the projection of conducting strip are underlaped.
US2021376372A1 provides an electrode assembly and a related battery, and battery module are provided, wherein the electrode assembly includes: at least one positive electrode plate and at least one negative electrode plate, the number of all the positive and negative electrode plates is greater than or equal to 3; the positive and negative electrode plates are wound around the winding axis and arranged in a superimposing manner along a direction vertical to the winding axis, each positive electrode plate includes a positive main body part, at least part of the positive main body part is a positive active substance area, each negative electrode plate includes a negative main body part, at least part of the negative main body part is the negative active substance area, two ends of the negative active substance area along the winding axis both exceed corresponding ends of the adjacent positive active substance area.

### SUMMARY

The present application aims to solve problems of safety of existing batteries. The invention is set out in the appended set of claims.

In the jelly roll and the battery of the present application, the first foil uncoating region disposed at the tail end of the first electrode plate and the second foil uncoating region disposed at the tail end of the second electrode plate are designed to be located in the first bending region, and the projections, in the thickness direction of the jelly roll, of the first foil uncoating region and the second foil uncoating region are designed to not exceed the first bending region, so that the first foil uncoating region and the second foil uncoating region are both located in the first bending region, but both the first foil uncoating region and the second foil uncoating region are wound around part of the first bending region, which makes pass rates of nail penetration more consistent at different positions of a jelly roll, thereby avoiding problems of inconsistent pass rates of nail penetration at different positions, and thus facilitating improving safety performance of a battery. In addition, both the first foil uncoating region and the second foil uncoating region that are located at the tail end of the jelly roll are wound around part of the first bending region, which reduces a size of foil uncoating regions that do not contribute to capacity, thereby facilitating improving an energy density of a battery. Additionally, having both the two foil uncoating regions at the tail end of the jelly roll in the first bending region, as opposed to two foil uncoating regions being on a flat plane, reduces a risk of burrs, formed by cutting a tail end of a jelly roll, piercing through the separator of the jelly roll, which can effectively reduce short circuit points of a jelly roll, thereby improving consistency of self-discharge of a jelly roll.

### BRIEF DESCRIPTION OF THE DRAWINGS

FIG. 1 is a schematic structural diagram of a jelly roll according to an embodiment of the present application.
FIG. 2 is a schematic structural diagram of a first electrode plate according to an embodiment of the present application.
FIG. 3 is a schematic structural diagram of a second electrode plate according to an embodiment of the present application.
FIG. 4 is a schematic structural diagram of nail penetration of a jelly roll according to an embodiment of the present application.
FIG. 5 is a schematic structural diagram of nail penetration of a conventionally structured jelly roll in the prior art.

### Reference numerals:

100. first electrode plate; 110. first current collector; 120. first active material layer; 130. first foil uncoating region; 140. priming coat; 150. insulating protective layer; 200. second electrode plate; 210. second current collector; 220. second active material layer; 230. second foil uncoating region; 300. separator; 400. first bending region; 500. first tab; 600. second tab; 700. insulating layer; 710. first insulating layer; 720. second insulating layer; 730. third insulating layer; 740. fourth insulating layer; 750. fifth insulating layer; 760. sixth insulating layer; and 770. seventh insulating layer.

### DETAILED DESCRIPTION OF THE EMBODIMENTS

The technical solutions of the present application are described in a clear and detailed manner below with reference to the accompanying drawings. It should be noted that in the description of the present application, orientations or positional relationships, indicated by the terms "center", "longitudinal", "lateral", "length", "width", "thickness", "upper", "lower", "front", "rear", "left", "right", "upright", "vertical", "horizontal", "top", "bottom", "inner", "outside", and the like, are based on the orientations or positional relationships shown in the accompanying drawings, which is merely used to facilitate describing the present application and simplify the description, rather than indicating or implying that a device or an element to which they refer must have a specific orientation and be constructed and operated in a specific orientation, and therefore, cannot be understood as a limitation to the present application. In addition, the terms "first" and "second" are only used for descriptive purposes and cannot be understood as indicating or implying relative importance or suggesting a number of technical features to which they refer. Therefore, features defined with "first" and "second" may explicitly or implicitly include one or more of the features. In addition, in the description of the present application, the meaning of "at least one" is one or more, unless otherwise specifically defined.

In the description of the present specification, the term "on the basis of the above embodiments" means that specific features, structures, materials, or characteristics described in conjunction with that embodiment or example is included in at least one preferred embodiment or preferred example of the present application. In this specification, the schematic representations of the above terms do not necessarily refer to the same implementation or instance. Furthermore, the described specific features, structures, materials, or characteristics may be combined in any one or more embodiments or examples in a suitable manner.

In the related technologies, in order to improve nail penetration performance of a battery, for example, the nail penetration performance of a lithium-ion battery. An aluminum foil uncoated with active material layer at a tail end of a positive electrode plate may be pretreated, for example, an insulating layer is coated on the aluminum foil uncoated with active material layer at the tail end of the positive electrode plate. However, when a nail pierces into a battery cell through the pretreated aluminum foil uncoated with active material layer at the tail end, contact between the aluminum foil and a negative electrode active material layer is very easily triggered, thereby causing a battery to ignite and burn. When the nail pierces into the battery cell through a position that does not contain the aluminum foil uncoated with active material layer at the tail end, a probability of the contact between the aluminum foil and the negative electrode active material layer is obviously reduced, and a pass rate of nail penetration obviously improved. Although this structure can improve nail penetration performance of a battery, there are problems of inconsistent safety at different positions of a battery cell. In addition, the aluminum foil uncoated with active material layer at the tail end of the positive electrode plate does not contain a positive electrode active material layer on either sides, and the aluminum foil uncoated with active material layer occupies a space inside the battery cell and does not contribute to capacity, which may affect an energy density of a battery, thereby failing to ensure both safety and an energy density of a battery.

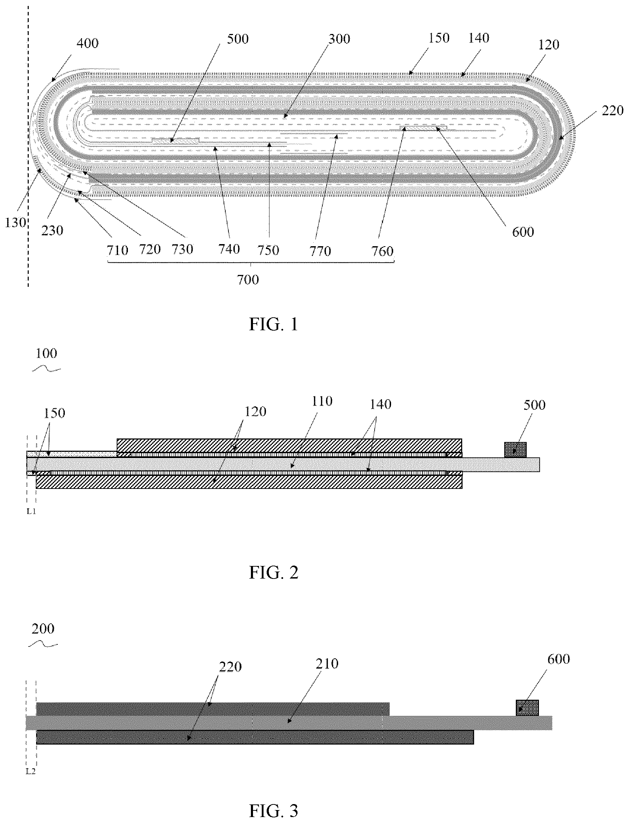

With reference to FIG. 1 to FIG. 3, the embodiments of the present application provide a jelly roll, including a first electrode plate 100, a second electrode plate 200 and a separator 300 disposed between the first electrode plate 100 and the second electrode plate 200, and polarities of the first electrode plate 100 and the second electrode plate 200 are opposite.

The first electrode plate 100, the separator 300 and the second electrode plate 200 are disposed in a stacked manner, and are all wound from a start end to a tail end to form the jelly roll. The first electrode plate 100 is wound from a start end of the first electrode plate 100 to a tail end of the first electrode plate 100, the second electrode plate 200 is wound from a start end of the second electrode plate 200 to a tail end of the second electrode plate 200, and the separator 300 is wound from a start end of the separator 300 to a tail end of the separator 300.

The first electrode plate 100 includes a first current collector 110 and a first active material layer 120, and the first active material layer 120 is coated on a surface of the first current collector 110. The tail end of the first electrode plate 100 is a first foil uncoating region 130 where the first active material layer 120 is not coated on both sides of the first current collector 110.

The second electrode plate 200 includes a second current collector 210 and a second active material layer 220, and the second active material layer 220 is coated on a surface of the second current collector 210. The tail end of the second electrode plate 200 is a second foil uncoating region 230 where the second active material layer 220 is not coated on both sides of the second current collector 210.

The jelly roll includes a first bending region 400 disposed at an outermost side of the jelly roll, the tail end of the first electrode plate 100 and the tail end of the second electrode plate 200 are both located in the first bending region 400, and neither of projections, in a thickness direction of the jelly roll, of the first foil uncoating region 130 and the second foil uncoating region 230 exceeds the first bending region 400.

In the jelly roll provided in the embodiments, the first foil uncoating region 130 disposed at the tail end of the first electrode plate 100 and the second foil uncoating region 230 disposed at the tail end of the second electrode plate 200 are designed to be located in the first bending region 400, and the projections, in the thickness direction of the jelly roll, of the first foil uncoating region 130 and the second foil uncoating region 230 are designed to not exceed the first bending region 400, so that the first foil uncoating region 130 and the second foil uncoating region 230 are both located in the first bending region 400, but both the first foil uncoating region 130 and the second foil uncoating region 230 are wound around part of the first bending region 400, which makes pass rates of nail penetration more consistent at different positions of a jelly roll, thereby avoiding problems of inconsistent pass rates of nail penetration at different positions, and thus facilitating improving safety performance of a battery. In addition, both the first foil uncoating region 130 and the second foil uncoating region 230 that are located at the tail end of the jelly roll are wound around part of the first bending region 400, which reduces a size of foil uncoating regions that do not contribute to capacity, thereby facilitating improving an energy density of a battery. Additionally, having both the two foil uncoating regions 130, 230 at the tail end of the jelly roll in the first bending region 400, as opposed to two foil uncoating regions being on a flat plane, reduces a risk of burrs, formed by cutting a tail end of a jelly roll, piercing through the separator 300 of the jelly roll, which can effectively reduce short circuit points of a jelly roll, thereby improving consistency of self-discharge of a jelly roll.

The start end of the first electrode plate 100 and the start end of the second electrode plate 200 respectively refer to an end where winding of the first electrode plate 100 starts and an end where the winding of the second electrode plate 200 starts during a winding process of the jelly roll, and the tail end of the first electrode plate 100 and the tail end of the second electrode plate 200 respectively refer to an end where the winding the first electrode plate 100 concludes and an end where the winding of the second electrode plate 200 concludes during the winding process of the jelly roll.

In the embodiments, a surface formed by extending a most protruding point of a bending region of the jelly roll along the thickness direction of the jelly roll is known as the first end face (i.e., the vertical dashed line in FIG. 1), the first bending region 400 is an arc-shaped face that is tangent to the first end face and is located in the bending region of the jelly roll, the first foil uncoating region 130 and the second foil uncoating region 230 are set to close to the first end face, and the first foil uncoating region 130 and the second foil uncoating region 230 are located in the first bending region 400.

On the basis of the above embodiments, with reference to FIG. 1 and FIG. 2, a size, along a winding direction, of the first foil uncoating region 130 ranges from 0.1 mm to πT/2+8 mm, where T is a thickness of the jelly roll, i.e., L1 shown in FIG. 2 is greater than or equal to 0.1 mm and is less than or equal to Tπ/2+8 mm, thereby ensuring that a projection, in the thickness direction of the jelly roll, of the first foil uncoating region 130 is located within the first bending region 400, but does not exceed the first bending region 400, and thus ensuring that on the premise of improving safety performance of a battery, an energy density of a battery cell is further improved.

On the basis of the above embodiments, with reference to FIG. 1 and FIG. 3, a size, along the winding direction, of the second foil uncoating region 230 ranges from 0.1 mm to 10 mm, i.e., L2 shown in FIG. 3 is greater than or equal to 0.1 mm and is less than or equal to 10 mm, thereby ensuring that a projection, in the thickness direction of the jelly roll, of the second foil uncoating region 230 is located within the first bending region 400, but does not exceed the first bending region 400, and thus ensuring that on the premise of improving safety performance of a battery, an energy density of a battery cell is further improved.

With reference to FIG. 1 and FIG. 2, the first electrode plate 100 further includes a priming coat 140, and the priming coat 140 is located between the first current collector 110 and the first active material layer 120. As long as a surface of the first current collector 110 is coated with the first active material layer 120, the priming coat 140 is disposed between the first current collector 110 and the first active material layer 120. Therefore, the priming coat 140 is disposed between the first current collector 110 and the first active material layer 120, which is beneficial for improving performance of a nail penetration test, thereby improving safety of a jelly roll.

In the embodiments, a material of the priming coat 140 is not further limited, and a person skilled in the art may select the material of the priming coat 140 according to actual situations, for example, the priming coat 140 may be composed of an inorganic material, a binder, and a conductive agent. A mass percentage of the inorganic material ranges from 60% to 99%, a mass percentage of the binder ranges from 0.5% to 20%, and a mass percentage of the conductive agent ranges from 0.5% to 20%. The inorganic material may be selected from one or a combination of alumina, boehmite, iron phosphate, manganese phosphate, manganese iron phosphate, aluminum phosphate, lithium nickel cobalt manganate, lithium nickel cobalt aluminate, lithium iron phosphate, sodium iron phosphate, lithium manganese phosphate, lithium manganese iron phosphate, lithium vanadium phosphate, lithium vanadium oxide phosphate, lithium vanadyl phosphate, lithium titanate, lithium manganate, and lithium nickel oxide. The binder may be selected from one or a combination of polyvinylidene fluoride, polyvinylidene fluoride-hexafluoropropylene, polypropylene, polyethylene, polytetrafluoroethylene, polystyrene, modified polyvinylidene fluoride, styrene-butadiene rubber, carboxymethyl cellulose, polyacrylic acid, polyacrylonitrile, polymethyl methacrylate, and polyacrylate. The conductive agent may be selected from one or a combination of conductive carbon black, carbon nanotubes, graphene, acetylene black, and the like.

In the embodiments, a thickness of the priming coat 140 may range from 1 µm to 30 µm, and a person skilled in the art may set the specific thickness of the priming coat 140 according to actual situations.

With reference to FIG. 1 and FIG. 2, the first electrode plate 100, disposed at an outermost ring of the jelly roll, is further provided with an insulating protective layer 150. The insulating protective layer 150 is disposed on a side surface, away from the first active material layer 120, of the first current collector 110, and the insulating protective layer 150 extends to a tail end of the first foil uncoating region 130, i.e., the insulating protective layer 150 is disposed on the side surface, facing towards an outside of the jelly roll, of the electrode plate 100 disposed at the outermost ring of the jelly roll, the first active material layer 120, opposite to the second active material layer 220, is disposed on a side surface, facing towards an inside of the jelly roll, of the electrode plate 100 disposed at the outermost ring of the jelly roll, and the insulating protective layer 150 is also disposed on a side surface, facing towards the outside of the jelly roll, of the first foil uncoating region 130. Therefore, the insulating protective layer 150 is disposed on the first electrode plate 100, so that during a nail penetration test, the insulating protective layer 150 can have an effect on preventing contact between the first current collector 110 and the second active material layer 220, thereby facilitating greatly improving safety performance of a jelly roll.

In the embodiments, a material of the insulating protective layer 150 is not further limited, and a person skilled in the art may select the material of the insulating protective layer 150 according to actual situations, for example, the insulating protective layer 150 may be composed of an inorganic material and a binder. A mass percentage of the inorganic material ranges from 50% to 99.5%, and a mass percentage of the binder ranges from 0.5% to 50%. The inorganic material may be selected from one or a combination of alumina, boehmite, magnesium oxide, magnesium hydroxide, titanium oxide, titanium dioxide, tin oxide, calcium oxide, calcium hydroxide, nickel oxide, zinc oxide, zirconium dioxide, hafnium dioxide, silicon dioxide, cerium dioxide, barium sulfate, and the like, D90 of the inorganic material is less than 40 µm, and a powder resistivity of the inorganic material is greater than 104 Ω*cm. The binder may be selected from one or a combination of polyvinylidene fluoride, polyvinylidene fluoride-hexafluoropropylene, polypropylene, polyethylene, polytetrafluoroethylene, polystyrene, modified polyvinylidene fluoride, styrene-butadiene rubber, carboxymethyl cellulose, polyacrylic acid, polyacrylonitrile, polymethyl methacrylate, and polyacrylate.

In the embodiments, a thickness of the insulating protective layer 150 may range from 1 µm to 50 µm, and a person skilled in the art may set the specific thickness of the insulating protective layer 150 according to actual situations.

In an embodiment, the first electrode plate 100 is sequentially provided with a third foil uncoating region, a first electrode plate double-sided coating region, a first electrode plate single-sided coating region (not shown in the Figures) and the first foil uncoating region 130 along the winding direction (i.e., a direction from a start end to a tail end). The third foil uncoating region refers to a region where neither of two opposite surfaces of the first current collector 110 is covered by any material, i.e., the third foil uncoating region refers to the region where neither of the two opposite surfaces of the first current collector 110 is covered by the first active material layer 120; and the first electrode plate double-sided coating region refers to a region where two opposite surfaces of the first current collector 110 are both covered by the priming coat 140 and the first active material layer 120; the first electrode plate single-sided coating region refers to a region where one of two opposite surfaces of the first current collector 110 is covered by the priming coat 140 and the first active material layer 120, and another of the two opposite surfaces of the first current collector 110 is only covered by the insulating protective layer 150; and the first foil uncoating region 130 refers to a region where one of two opposite surfaces of the first current collector 110 is not covered by any material, and another of the two opposite surfaces of the first current collector 110 is only covered by the insulating protective layer 150.

With reference to FIG. 1 and FIG. 3, the second electrode plate 200 is sequentially provided with a fourth foil uncoating region, a second electrode plate single-sided coating region, a second electrode plate double-sided coating region (not shown in the Figures) and the second foil uncoating region 230 along the winding direction. The fourth foil uncoating region refers to a region where neither of two opposite surfaces of the second current collector 210 is covered by the second active material layer 220; the second electrode plate single-sided coating region refers to a region where one of two opposite surfaces of the second current collector 210 is covered by the second active material layer 220, and another of the two opposite surfaces of the second current collector 210 is not covered by the second active material layer 220; the second electrode plate double-sided coating region refers to a region where two opposite surfaces of the second current collector 210 are both covered by the second active material layer 220; and the second foil uncoating region 230 refers to a region where neither of two opposite surfaces of the second current collector 210 is covered by the second active material layer 220.

In the thickness direction of the jelly roll, a projection of the second electrode plate double-sided coating region covers a projection of a junction between the first electrode plate single-sided coating region and the first foil uncoating region 130, i.e., a distance from the junction between the second electrode plate double-sided coating region and the second foil uncoating region 230 to the first end face is less than or equal to a distance from the junction between the first electrode plate single-sided coating region and the first foil uncoating region 130 to the first end face, and therefore, the first foil uncoating region 130 is set to extend beyond the second foil uncoating region 230 along the winding direction, which is beneficial for further improving safety performance of a jelly roll.

A person skilled in the art may set the distance from the junction of the second electrode plate double-sided coating region and the second foil uncoating region 230 to the first end face, and the distance from the junction of the first electrode plate single-sided coating region and the first foil uncoating region 130 to the first end face according to actual situations. However, in order to ensure an overall flatness of a jelly roll, the distance from the junction of the second electrode plate double-sided coating region and the second foil uncoating region 230 to the first end face is greater than or equal to T/2 mm and is less than or equal to T/2+8 mm, so that an overall flatness of a jelly roll can be ensured, thereby facilitating improving performance of a jelly roll.

The jelly roll further includes a first tab 500 and a second tab 600, the first tab 500 is connected to the first electrode plate 100, and the second tab 600 is connected to the second electrode plate 200. In the thickness direction of the jelly roll, projections of the first tab 500 and the second tab 600 do not overlap. The first tab 500 may be disposed in the third foil uncoating region, and the second tab 600 may be disposed in the fourth foil uncoating region.

The jelly roll further includes an insulating layer 700, and disposal of the insulating layer 700 may further protect a jelly roll, thereby avoiding occurrence of short circuit phenomenon. The insulating layer 700 includes a first insulating layer 710, a second insulating layer 720, a third insulating layer 730 and a fourth insulating layer 740. The first insulating layer 710 covers a side surface, facing towards an outside of the jelly roll, of the first foil uncoating region 130 and a side surface, away from the first current collector 110, of the insulating protective layer 150. The first insulating layer 710 extends towards the first bending region 400, and in the thickness direction of the jelly roll, a projection of the first insulating layer 710 covers a projection of the first bending region 400. The second insulating layer 720 covers a junction between the first electrode plate single-sided coating region and the first foil uncoating region 130. The third insulating layer 730 covers a junction between the first electrode plate double-sided coating region and the first electrode plate single-sided coating region. The fourth insulating layer 740 covers a junction between the third foil uncoating region and the first electrode plate double-sided coating region. Therefore, safety risks, such as short circuits or leakage, caused by burrs of an active material piercing through the separator 300 or a housing at the junctions between the first electrode plate single-sided coating region and the first foil uncoating region 130, and between the first electrode plate double-sided coating region and the first electrode plate single-sided coating region, can be avoided.

The insulating layer 700 further includes a fifth insulating layer 750, a sixth insulating layer 760, and a seventh insulating layer 770. The fifth insulating layer 750 covers a surface of the first tab 500, the sixth insulating layer 760 covers a surface of the second tab 600, and the seventh insulating layer 770 covers a position, opposite to a start end of the third foil uncoating region, of the second electrode plate 200, and therefore, occurrence of short circuits, caused by burrs piercing through the separator 300 at edges of the first tab 500, the second tab 600 and the third foil uncoating region, can be avoided.

In the embodiments, a material of the insulating layer 700 is not further limited, and a person skilled in the art may select the material of the insulating layer 700 according to actual situations, for example, the material of the insulating layer 700 may be selected from one or a combination of acrylic adhesives, rubber adhesives, hot melt adhesives, and the like.

In the embodiments, lengths of the above insulating layers are not further limited, and a person skilled in the art may set the lengths of the above insulating layers according to actual situations, as long as short circuit phenomenon, caused by burrs piercing through the separator 300 at lithium dendrites formed by lithium precipitation or cutting ports, can be avoided.

On the basis of the above embodiments, the first electrode plate 100 is a positive electrode plate, and the second electrode plate 200 is a negative electrode plate, which not only improves an energy density of a battery and a pass rate of a nail penetration test, but also can prevent corrosion caused by formation of a galvanic cell between a jelly roll and an outer housing after the jelly roll is wound.

In the above embodiments, a material of the first electrode plate 100 and a material of the second electrode plate 200 may be one or more types of metal foils, such as an aluminum foil, a copper foil, a nickel foil, a gold foil and a platinum foil. Preferably, the material of the first electrode plate 100 is the aluminum foil, the material of the second electrode plate 200 is the copper foil, the material of the first tab 500 is also the aluminum foil, and the material of the second tab 600 is the copper foil.

In the embodiments, a tail end of the separator 300 exceeds beyond a tail end of the second foil uncoating region 230. After the separator 300 is wound, the wound separator 300 has two tail ends, and the two tail ends wrap the tail end of the second foil uncoating region 230, thereby further improving safety of a jelly roll.

In the embodiments, a dimension by which the tail end of the separator 300 extends beyond the tail end of the second foil uncoating region 230 is not further limited, and a person skilled in the art may set the dimension according to actual situations, for example, the dimension by which the tail end of the separator 300 exceeds beyond the tail end of the second foil uncoating region 230 is greater than or equal to 1 mm.

An energy density of a conventionally structured jelly roll (i.e., a tail end of a first foil uncoating region 130 extends beyond a first bending region 400 and is located in a flat region) is Q, and in the jelly roll of the embodiments, a thickness of the jelly roll is T, a thickness of the first current collector 110 is T1, and a thickness of the insulating protective layer 150 is T2, and therefore, an energy density of the jelly roll of the embodiments is Q1 = T * Q / (T - T1 - T2).

A second aspect of the embodiments of the present application provides a battery, the battery includes a housing and the jelly roll according to the first aspect, and the jelly roll is packaged in the housing.

In the embodiments, the housing is not further limited, and a person skilled in the art may select the housing according to actual situations, for example, the housing is an aluminum laminated film housing.

In the battery provided in the embodiments, the first foil uncoating region 130 disposed at the tail end of the first electrode plate 100 and the second foil uncoating region 230 disposed at the tail end of the second electrode plate 200 are designed to be located in the first bending region 400, and the projections, in the thickness direction of the jelly roll, of the first foil uncoating region 130 and the second foil uncoating region 230 are designed to not exceed the first bending region 400, so that the first foil uncoating region 130 and the second foil uncoating region 230 are both located in the first bending region 400, but both the first foil uncoating region 130 and the second foil uncoating region 230 are wound around part of the first bending region 400, which makes pass rates of nail penetration more consistent at different positions of a jelly roll, thereby avoiding problems of inconsistent pass rates of nail penetration at different positions, and thus facilitating improving safety performance of a battery. In addition, both the first foil uncoating region 130 and the second foil uncoating region 230 that are located at the tail end of the jelly roll are wound around part of the first bending region 400, which reduces a size of foil uncoating regions that do not contribute to capacity, thereby facilitating improving an energy density of a battery. Additionally, having both the two foil uncoating regions 130, 230 at the tail end of the jelly roll in the first bending region 400, as opposed to two foil uncoating regions being on a flat plane, reduces a risk of burrs, formed by cutting a tail end of a jelly roll, piercing through the separator 300 of the jelly roll, which can effectively reduce short circuit points of a jelly roll, thereby improving consistency of self-discharge of a jelly roll.

In order to further illustrate the jelly roll of the embodiments in improving safety and increasing an energy density, the following comparative examples are used for further explanation.

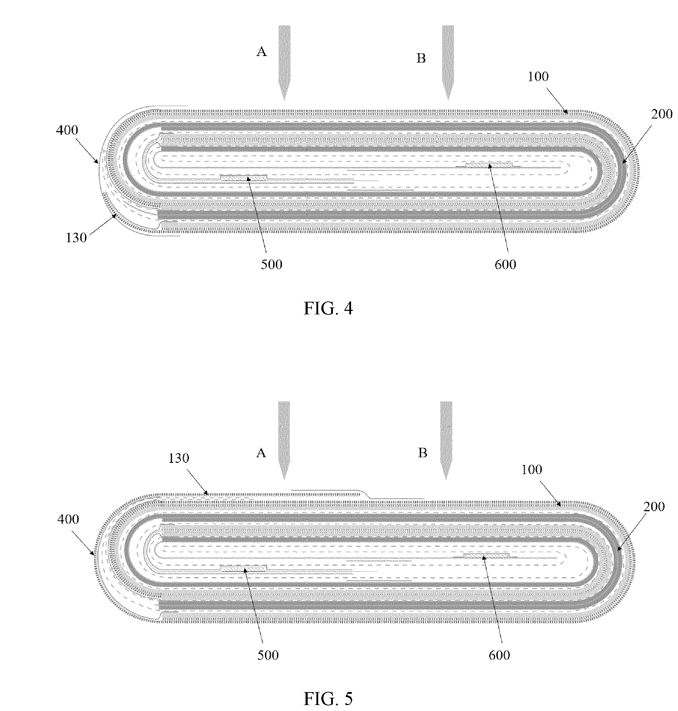

The embodiments of the present application use the structure of the jelly roll in FIG. 4.

Comparative example 1 uses a conventionally structured jelly roll, i.e., the structure of the jelly roll in FIG. 5 is used, and a tail end of a first foil uncoating region 130 extends beyond a first bending region 400 and is located in a flat region.

Comparative example 2 uses the structure of the jelly roll in FIG. 4, but a first current collector 110 is not provided with a priming coat 140 and an insulating protective layer 150.

Comparative example 3 uses the structure of the jelly roll in FIG. 4, but a first current collector 110 is not provided with a priming coat 140 and an insulating protective layer 150, and a tail end of a first foil uncoating region 130 extends beyond a first bending region 400 and is located in a flat region.

The jelly roll of the embodiments of the present application and the jelly rolls of the comparative example 1 to the comparative example 3 were subjected to a nail penetration test, conditions of the nail penetration test are that a 3 mm steel nail is used to pierce through the battery at positions A and B (the two positions may be referred to FIG. 4 and FIG. 5) at a speed of 30 mm/s. The criteria for judgment are: if the battery neither smokes nor catches fire, it is determined that the battery passes the test, and if the battery smokes or catches fire, it is determined that the battery does not pass the test. A test result is shown in Table 1.

**Table 1**

| Group | Energy density (Wh/L) | Pass rate of nail penetration test at position A (%) | Pass rate of nail penetration test at position B (%) |
|---|---|---|---|
| Embodiments of the present application | 720 | 100 | 100 |
| Comparative example 1 | 712 | 68 | 100 |
| Comparative example 2 | 748 | / | / |
| Comparative example 3 | 743 | / | / |

The conventionally structured jelly roll of the comparative example 1 was tested at the position A for 50 pcs, the battery smokes and catches fire at 16 pcs, and the pass rate is 68%; and the conventionally structured jelly roll of the comparative example 1 was tested at the position B for 50 pcs, the battery smokes and catches fire at 0 pcs, and the pass rate is 100%. It can be seen that the pass rates of the nail penetration test of the conventionally structured jelly roll at the positions A and B are obviously different, a charging and discharging voltage of the conventionally structured jelly roll ranges from 4.45 V to 3 V, a capacity of the conventionally structured jelly roll is 5000mAh, and an energy density of the conventionally structured jelly roll is 712 Wh/L. However, the jelly roll of the embodiments of the present application was tested at the position A for 50 pcs, the battery smokes and catches fire at 0 pcs, and the pass rate is 100%; and the jelly roll of the embodiments of the present application was tested at the position B for 50 pcs, the battery smokes and catches fire at 0 pcs, and the pass rate is 100%. It can be seen that the pass rates of the nail penetration test of the jelly roll of the embodiments of the present application at the positions A and B are obviously improved, a charging and discharging voltage of the jelly roll of the embodiments of the present application ranges from 4.45 V to 3V, a capacity of the jelly roll of the embodiments of the present application is 5000 mAh, and an energy density of the jelly roll of the embodiments of the present application is 720 WH/L. Compared with the conventionally structured jelly roll (for example, a lithium-ion battery), the energy density of the jelly roll of the embodiments of the present application is increased by 8 WH/L.

In addition, it can be seen from Table 1 that the priming coat 140 and the insulating protective layer 150 are disposed on the first current collector 110, so that performance of the nail penetration test can be ensured, thereby facilitating improving safety of a jelly roll.

## Claims

1. A jelly roll, comprising a first electrode plate (100) and a second electrode plate (200) that are disposed in a stacked manner, wherein the first electrode plate (100) is wound from a start end of the first electrode plate (100) to a tail end of the first electrode plate (100), and the second electrode plate (200) is wound from a start end of the second electrode plate (200) to a tail end of the second electrode plate (200);
the tail end of the first electrode plate (100) is a first foil uncoating region (130), and the tail end of the second electrode plate (200) is a second foil uncoating region (230); and
the jelly roll comprises a first bending region (400) disposed at an outermost side of the jelly roll,
the tail end of the first electrode plate (100) and the tail end of the second electrode plate (200) are both located in the first bending region (400), and neither of projections, in a thickness direction of the jelly roll, of the first foil uncoating region (130) and the second foil uncoating region (230) exceeds the first bending region (400),
**characterized in that**,
the second electrode plate (200) is sequentially provided with a fourth foil uncoating region, a second electrode plate single-sided coating region, a second electrode plate double-sided coating region and the second foil uncoating region (230) along the winding direction.

2. The jelly roll according to claim 1, wherein a size, along a winding direction, of the first foil uncoating region (130) ranges from 0.1 mm to πT/2+8 mm, where T is a thickness of the jelly roll.

3. The jelly roll according to claim 1 or claim 2, wherein a size, along a winding direction, of the second foil uncoating region (230) ranges from 0.1 mm to 10 mm.

4. The jelly roll according to any one of claims 1 to 3, wherein the first electrode plate (100) comprises a first current collector (110) and a first active material layer (120), and at a position where the first foil uncoating region (130) is located, neither of two side surfaces of the first current collector (110) is coated with the first active material layer (120).

5. The jelly roll according to claim 4, wherein the first electrode plate (100) further comprises a priming coat (140) located between the first current collector (110) and the first active material layer (120).

6. The jelly roll according to claim 4 or claim 5, wherein the first electrode plate (100), disposed at an outermost ring of the jelly roll, is further provided with an insulating protective layer (150), the insulating protective layer (150) is disposed on a side surface, away from the first active material layer (120), of the first current collector (110), and the insulating protective layer (150) extends to a tail end of the first foil uncoating region (130).

7. The jelly roll according to any one of claims 1 to 6, wherein the first electrode plate (100) is sequentially provided with a third foil uncoating region, a first electrode plate double-sided coating region, a first electrode plate single-sided coating region and the first foil uncoating region (130) along a winding direction; and
a distance from a junction between the second electrode plate double-sided coating region and the second foil uncoating region (230) to a first end face is greater than or equal to T/2 mm and is less than or equal to T/2+8 mm, the first end face is a face formed by extending a most protruding point of a bending region of the jelly roll along the thickness direction of the jelly roll, and T is a thickness of the jelly roll.

8. The jelly roll according to claim 7, wherein in the thickness direction of the jelly roll, a projection of the second electrode plate double-sided coating region covers a projection of a junction between the first electrode plate single-sided coating region and the first foil uncoating region (130).

9. The jelly roll according to claim 7 or claim 8, wherein the first foil uncoating region (130) extends beyond the second foil uncoating region (230) along the winding direction.

10. The jelly roll according to any one of claims 7 to 9, further comprising a first tab (500) and a second tab (600), wherein the first tab (500) is disposed in the third foil uncoating region, the second tab (600) is disposed in the fourth foil uncoating region, and projections of the first tab (500) and the second tab (600) do not overlap in the thickness direction of the jelly roll.

11. The jelly roll according to claim 10, further comprising an insulating layer (700), wherein the insulating layer (700) comprises a first insulating layer (710), a second insulating layer (720), a third insulating layer (730), a fourth insulating layer (740), a fifth insulating layer (750), a sixth insulating layer (760), and a seventh insulating layer (770), the fifth insulating layer (750) covers a surface of the first tab (500), the sixth insulating layer (760) covers a surface of the second tab (600), the seventh insulating layer (770) covers a position, opposite to a start end of the third foil uncoating region, of the second electrode plate (200), the fourth insulating layer (740) covers a junction between the third foil uncoating region and the first electrode plate double-sided coating region, the third insulating layer (730) covers a junction between the first electrode plate double-sided coating region and the first electrode plate single-sided coating region, the second insulating layer (720) covers a junction between the first electrode plate single-sided coating region and the first foil uncoating region (130), the first insulating layer (710) covers at least one of a side surface, facing towards an outside of the jelly roll, of the first foil uncoating region (130) and a side surface, away from a first current collector (110) of the first electrode plate (100), of an insulating protective layer (150), and the insulating protective layer (150) is disposed on the first electrode plate (100) disposed at an outermost ring of the jelly roll.

12. The jelly roll according to claim 11, wherein the first insulating layer (710) extends towards the first bending region (400), and in the thickness direction of the jelly roll, a projection of the first insulating layer (710) covers a projection of the first bending region (400).

13. The jelly roll according to any one of claims 1 to 12, wherein the second electrode plate (200) comprises a second current collector (210) and a second active material layer (220), and at a position where the second foil uncoating region (230) is located, neither of two side surfaces of the second current collector (210) is coated with the second active material layer (220).

14. The jelly roll according to any one of claims 1 to 13, further comprising a separator (300) disposed between the first electrode plate (100) and the second electrode plate (200), wherein the separator (300) is wound from a start end of the separator (300) to a tail end of the separator (300);
the tail end of the separator (300) exceeds beyond a tail end of the second foil uncoating region (230); and
the separator (300) is provided with two tail ends, and the two tail ends wrap a tail end of the second foil uncoating region (230).

15. A battery, comprising a housing and the jelly roll according to any one of claims 1 to 14, wherein the jelly roll is packaged in the housing.

## Patentansprüche

1. Ein Elektrodenwickel, der eine erste Elektrodenplatte (100) und eine zweite Elektrodenplatte (200) beinhaltet, die auf eine gestapelte Weise angeordnet sind, wobei die erste Elektrodenplatte (100) von einem Anfangsende der ersten Elektrodenplatte (100) zu einem hinteren Ende der ersten Elektrodenplatte (100) gewickelt ist und die zweite Elektrodenplatte (200) von einem Anfangsende der zweiten Elektrodenplatte (200) zu einem hinteren Ende der zweiten Elektrodenplatte (200) gewickelt ist;
das hintere Ende der ersten Elektrodenplatte (100) eine erste Foliennichtbeschichtungsregion (130) ist und das hintere Ende der zweiten Elektrodenplatte (200) eine zweite Foliennichtbeschichtungsregion (230) ist; und
der Elektrodenwickel eine erste Biegeregion (400) beinhaltet, die an einer äußersten Seite des Elektrodenwickels angeordnet ist,
das hintere Ende der ersten Elektrodenplatte (100) und das hintere Ende der zweiten Elektrodenplatte (200) sich beide in der ersten Biegeregion (400) befinden und keine der Projektionen, in einer Dickenrichtung des Elektrodenwickels, von der ersten Foliennichtbeschichtungsregion (130) und der zweiten Foliennichtbeschichtungsregion (230) die erste Biegeregion (400) überschreitet,
**dadurch gekennzeichnet, dass**
die zweite Elektrodenplatte (200) entlang der Wickelrichtung nacheinander mit einer vierten Foliennichtbeschichtungsregion, einer einseitigen Beschichtungsregion der zweiten Elektrodenplatte, einer doppelseitigen Beschichtungsregion der zweiten Elektrodenplatte und der zweiten Foliennichtbeschichtungsregion (230) versehen ist.

2. Elektrodenwickel gemäß Anspruch 1, wobei eine Größe, entlang einer Wickelrichtung, der ersten Foliennichtbeschichtungsregion (130) im Bereich von 0,1 mm bis πT / 2 + 8 mm liegt, wobei T eine Dicke des Elektrodenwickels ist.

3. Elektrodenwickel gemäß Anspruch 1 oder Anspruch 2, wobei eine Größe, entlang einer Wickelrichtung, der zweiten Foliennichtbeschichtungsregion (230) im Bereich von 0,1 mm bis 10 mm liegt.

4. Elektrodenwickel gemäß einem der Ansprüche 1 bis 3, wobei die erste Elektrodenplatte (100) einen ersten Stromabnehmer (110) und eine erste Aktivmaterialschicht (120) beinhaltet und an einer Position, an der sich die erste Foliennichtbeschichtungsregion (130) befindet, keine von zwei Seitenoberflächen des ersten Stromabnehmers (110) mit der ersten Aktivmaterialschicht (120) beschichtet ist.

5. Elektrodenwickel gemäß Anspruch 4, wobei die erste Elektrodenplatte (100) ferner eine Grundierungsschicht (140) beinhaltet, die sich zwischen dem ersten Stromabnehmer (110) und der ersten Aktivmaterialschicht (120) befindet.

6. Elektrodenwickel gemäß Anspruch 4 oder Anspruch 5, wobei die erste Elektrodenplatte (100), die an einem äußersten Ring des Elektrodenwickels angeordnet ist, ferner mit einer isolierenden Schutzschicht (150) versehen ist, die isolierende Schutzschicht (150) auf einer von der ersten Aktivmaterialschicht (120) entfernt liegenden Seitenoberfläche des ersten Stromabnehmers (110) angeordnet ist und sich die isolierende Schutzschicht (150) zu einem hinteren Ende der ersten Foliennichtbeschichtungsregion (130) erstreckt.

7. Elektrodenwickel gemäß einem der Ansprüche 1 bis 6, wobei die erste Elektrodenplatte (100) entlang einer Wickelrichtung nacheinander mit einer dritten Foliennichtbeschichtungsregion, einer doppelseitigen Beschichtungsregion der ersten Elektrodenplatte, einer einseitigen Beschichtungsregion der ersten Elektrodenplatte und der ersten Foliennichtbeschichtungsregion (130) versehen ist; und
ein Abstand von einer Verbindungsstelle zwischen der doppelseitigen Beschichtungsregion der zweiten Elektrodenplatte und der zweiten Foliennichtbeschichtungsregion (230) zu einer ersten Endfläche größer als oder gleich T / 2 mm und kleiner als oder gleich T / 2 + 8 mm ist, die erste Endfläche eine Fläche ist, die durch Verlängerung eines am meisten hervorstehenden Punkts einer Biegeregion des Elektrodenwickels entlang der Dickenrichtung des Elektrodenwickels gebildet wird, und T eine Dicke des Elektrodenwickels ist.

8. Elektrodenwickel gemäß Anspruch 7, wobei in der Dickenrichtung des Elektrodenwickels eine Projektion der doppelseitigen Beschichtungsregion der zweiten Elektrodenplatte eine Projektion einer Verbindungsstelle zwischen der einseitigen Beschichtungsregion der ersten Elektrodenplatte und der ersten Foliennichtbeschichtungsregion (130) bedeckt.

9. Elektrodenwickel gemäß Anspruch 7 oder Anspruch 8, wobei sich die erste Foliennichtbeschichtungsregion (130) entlang der Wickelrichtung über die zweite Foliennichtbeschichtungsregion (230) hinaus erstreckt.

10. Elektrodenwickel gemäß einem der Ansprüche 7 bis 9, der ferner eine erste Kontaktfahne (500) und eine zweite Kontaktfahne (600) beinhaltet, wobei die erste Kontaktfahne (500) in der dritten Foliennichtbeschichtungsregion angeordnet ist, die zweite Kontaktfahne (600) in der vierten Foliennichtbeschichtungsregion angeordnet ist und sich Projektionen der ersten Kontaktfahne (500) und der zweiten Kontaktfahne (600) in der Dickenrichtung des Elektrodenwickels nicht überlappen.

11. Elektrodenwickel gemäß Anspruch 10, der ferner eine Isolierschicht (700) beinhaltet, wobei die Isolierschicht (700) eine erste Isolierschicht (710), eine zweite Isolierschicht (720), eine dritte Isolierschicht (730), eine vierte Isolierschicht (740), eine fünfte Isolierschicht (750), eine sechste Isolierschicht (760) und eine siebte Isolierschicht (770) beinhaltet, die fünfte Isolierschicht (750) eine Oberfläche der ersten Kontaktfahne (500) bedeckt, die sechste Isolierschicht (760) eine Oberfläche der zweiten Kontaktfahne (600) bedeckt, die siebte Isolierschicht (770) eine gegenüber einem Anfangsende der dritten Foliennichtbeschichtungsregion liegende Position der zweiten Elektrodenplatte (200) bedeckt, die vierte Isolierschicht (740) eine Verbindungsstelle zwischen der dritten Foliennichtbeschichtungsregion und der doppelseitigen Beschichtungsregion der ersten Elektrodenplatte bedeckt, die dritte Isolierschicht (730) eine Verbindungsstelle zwischen der doppelseitigen Beschichtungsregion der ersten Elektrodenplatte und der einseitigen Beschichtungsregion der ersten Elektrodenplatte bedeckt, die zweite Isolierschicht (720) eine Verbindungsstelle zwischen der einseitigen Beschichtungsregion der ersten Elektrodenplatte und der ersten Foliennichtbeschichtungsregion (130) bedeckt, die erste Isolierschicht (710) mindestens eine von einer einer Außenseite des Elektrodenwickels zugewandten Seitenoberfläche der ersten Foliennichtbeschichtungsregion (130) und einer von einem ersten Stromabnehmer (110) der ersten Elektrodenplatte (100) entfernt liegenden Seitenoberfläche einer isolierenden Schutzschicht (150) bedeckt und die isolierende Schutzschicht (150) auf der ersten Elektrodenplatte (100) angeordnet ist, die an einem äußersten Ring des Elektrodenwickels angeordnet ist.

12. Elektrodenwickel gemäß Anspruch 11, wobei sich die erste Isolierschicht (710) zu der ersten Biegeregion (400) erstreckt und eine Projektion der ersten Isolierschicht (710) in der Dickenrichtung des Elektrodenwickels eine Projektion der ersten Biegeregion (400) bedeckt.

13. Elektrodenwickel gemäß einem der Ansprüche 1 bis 12, wobei die zweite Elektrodenplatte (200) einen zweiten Stromabnehmer (210) und eine zweite Aktivmaterialschicht (220) beinhaltet und an einer Position, an der sich die zweite Foliennichtbeschichtungsregion (230) befindet, keine von zwei Seitenoberflächen des zweiten Stromabnehmers (210) mit der zweiten Aktivmaterialschicht (220) beschichtet ist.

14. Elektrodenwickel gemäß einem der Ansprüche 1 bis 13, der ferner einen Separator (300) beinhaltet, der zwischen der ersten Elektrodenplatte (100) und der zweiten Elektrodenplatte (200) angeordnet ist, wobei der Separator (300) von einem Anfangsende des Separators (300) zu einem hinteren Ende des Separators (300) gewickelt ist;
das hintere Ende des Separators (300) über ein hinteres Ende der zweiten Foliennichtbeschichtungsregion (230) hinausgeht; und
der Separator (300) mit zwei hinteren Enden versehen ist und die zwei hinteren Enden ein hinteres Ende der zweiten Foliennichtbeschichtungsregion (230) umhüllen.

15. Eine Batterie, die ein Gehäuse und den Elektrodenwickel gemäß einem der Ansprüche 1 bis 14 beinhaltet, wobei der Elektrodenwickel in dem Gehäuse verpackt ist.

## Revendications

1. Un rouleau (*jelly roll*), comprenant une première plaque-électrode (100) et une deuxième plaque-électrode (200) qui sont disposées de manière empilée, la première plaque-électrode (100) étant enroulée à partir d'une extrémité de départ de la première plaque-électrode (100) jusqu'à une extrémité de queue de la première plaque-électrode (100), et la deuxième plaque-électrode (200) étant enroulée à partir d'une extrémité de départ de la deuxième plaque-électrode (200) jusqu'à une extrémité de queue de la deuxième plaque-électrode (200) ;
l'extrémité de queue de la première plaque-électrode (100) est une première région sans revêtement de feuille (130), et l'extrémité de queue de la deuxième plaque-électrode (200) est une deuxième région sans revêtement de feuille (230) ; et
le rouleau comprenant une première région de courbure (400) disposée au niveau d'un côté le plus à l'extérieur du rouleau,
l'extrémité de queue de la première plaque-électrode (100) et l'extrémité de queue de la deuxième plaque-électrode (200) sont toutes deux situées dans la première région de courbure (400), et aucune saillie parmi des saillies, dans une direction d'épaisseur du rouleau, de la première région sans revêtement de feuille (130) et de la deuxième région sans revêtement de feuille (230) ne dépasse la première région de courbure (400),
**caractérisé en ce que**,
la deuxième plaque-électrode (200) est séquentiellement pourvue d'une quatrième région sans revêtement de feuille, d'une région de revêtement simple face de deuxième plaque-électrode, d'une région de revêtement double face de deuxième plaque-électrode et de la deuxième région sans revêtement de feuille (230) le long de la direction d'enroulement.

2. Le rouleau selon la revendication 1, dans lequel une taille, le long d'une direction d'enroulement, de la première région sans revêtement de feuille (130) va de 0,1 mm à πT/2+8 mm, où T est une épaisseur du rouleau.

3. Le rouleau selon la revendication 1 ou la revendication 2, dans lequel une taille, le long d'une direction d'enroulement, de la deuxième région sans revêtement de feuille (230) va de 0,1 mm à 10 mm.

4. Le rouleau selon l'une quelconque des revendications 1 à 3, dans lequel la première plaque-électrode (100) comprend un premier collecteur de courant (110) et une première couche de matériau actif (120), et à une position où la première région sans revêtement de feuille (130) est située, aucune surface parmi deux surfaces latérales du premier collecteur de courant (110) n'est revêtue de la première couche de matériau actif (120).

5. Le rouleau selon la revendication 4, dans lequel la première plaque-électrode (100) comprend en outre un revêtement primaire (140) situé entre le premier collecteur de courant (110) et la première couche de matériau actif (120).

6. Le rouleau selon la revendication 4 ou la revendication 5, dans lequel la première plaque-électrode (100), disposée au niveau d'un anneau le plus à l'extérieur du rouleau, est en outre pourvue d'une couche protectrice isolante (150), la couche protectrice isolante (150) est disposée sur une surface latérale, loin de la première couche de matériau actif (120), du premier collecteur de courant (110), et la couche protectrice isolante (150) s'étend jusqu'à une extrémité de queue de la première région sans revêtement de feuille (130).

7. Le rouleau selon l'une quelconque des revendications 1 à 6, dans lequel la première plaque-électrode (100) est séquentiellement pourvue d'une troisième région sans revêtement de feuille, d'une région de revêtement double face de première plaque-électrode, d'une région de revêtement simple face de première plaque-électrode et de la première région sans revêtement de feuille (130) le long d'une direction d'enroulement ; et
une distance d'une jonction entre la région de revêtement double face de deuxième plaque-électrode et la deuxième région sans revêtement de feuille (230) à une première face d'extrémité est supérieure ou égale à T/2 mm et est inférieure ou égale à T/2+8 mm, la première face d'extrémité est une face formée en étendant un point le plus en saillie d'une région de courbure du rouleau le long de la direction d'épaisseur du rouleau, et T est une épaisseur du rouleau.

8. Le rouleau selon la revendication 7, dans lequel, dans la direction d'épaisseur du rouleau, une saillie de la région de revêtement double face de deuxième plaque-électrode recouvre une saillie d'une jonction entre la région de revêtement simple face de première plaque-électrode et la première région sans revêtement de feuille (130).

9. Le rouleau selon la revendication 7 ou la revendication 8, dans lequel la première région sans revêtement de feuille (130) s'étend au-delà de la deuxième région sans revêtement de feuille (230) le long de la direction d'enroulement.

10. Le rouleau selon l'une quelconque des revendications 7 à 9, comprenant en outre une première languette (500) et une deuxième languette (600), la première languette (500) étant disposée dans la troisième région sans revêtement de feuille, la deuxième languette (600) étant disposée dans la quatrième région sans revêtement de feuille, et des saillies de la première languette (500) et de la deuxième languette (600) ne se chevauchant pas dans la direction d'épaisseur du rouleau.

11. Le rouleau selon la revendication 10, comprenant en outre une couche isolante (700), la couche isolante (700) comprenant une première couche isolante (710), une deuxième couche isolante (720), une troisième couche isolante (730), une quatrième couche isolante (740), une cinquième couche isolante (750), une sixième couche isolante (760), et une septième couche isolante (770), la cinquième couche isolante (750) recouvrant une surface de la première languette (500), la sixième couche isolante (760) recouvrant une surface de la deuxième languette (600), la septième couche isolante (770) recouvrant une position, opposée à une extrémité de départ de la troisième région sans revêtement de feuille, de la deuxième plaque-électrode (200), la quatrième couche isolante (740) recouvrant une jonction entre la troisième région sans revêtement de feuille et la région de revêtement double face de première plaque-électrode, la troisième couche isolante (730) recouvrant une jonction entre la région de revêtement double face de première plaque-électrode et la région de revêtement simple face de première plaque-électrode, la deuxième couche isolante (720) recouvrant une jonction entre la région de revêtement simple face de première plaque-électrode et la première région sans revêtement de feuille (130), la première couche isolante (710) recouvrant au moins une surface parmi une surface latérale, tournée vers un extérieur du rouleau, de la première région sans revêtement de feuille (130) et une surface latérale, loin d'un premier collecteur de courant (110) de la première plaque-électrode (100), d'une couche protectrice isolante (150), et la couche protectrice isolante (150) étant disposée sur la première plaque-électrode (100) disposée au niveau d'un anneau le plus à l'extérieur du rouleau.

12. Le rouleau selon la revendication 11, dans lequel la première couche isolante (710) s'étend vers la première région de courbure (400), et dans la direction d'épaisseur du rouleau, une saillie de la première couche isolante (710) recouvre une saillie de la première région de courbure (400).

13. Le rouleau selon l'une quelconque des revendications 1 à 12, dans lequel la deuxième plaque-électrode (200) comprend un deuxième collecteur de courant (210) et une deuxième couche de matériau actif (220), et à une position où la deuxième région sans revêtement de feuille (230) est située, aucune surface parmi deux surfaces latérales du deuxième collecteur de courant (210) n'est revêtue de la deuxième couche de matériau actif (220).

14. Le rouleau selon l'une quelconque des revendications 1 à 13, comprenant en outre un séparateur (300) disposé entre la première plaque-électrode (100) et la deuxième plaque-électrode (200), le séparateur (300) étant enroulé à partir d'une extrémité de départ du séparateur (300) jusqu'à une extrémité de queue du séparateur (300) ;
l'extrémité de queue du séparateur (300) dépasse au-delà d'une extrémité de queue de la deuxième région sans revêtement de feuille (230) ; et
le séparateur (300) est pourvu de deux extrémités de queue, et les deux extrémités de queue enveloppent une extrémité de queue de la deuxième région sans revêtement de feuille (230).

15. Une batterie, comprenant un boîtier et le rouleau selon l'une quelconque des revendications 1 à 14, dans laquelle le rouleau est conditionné dans le boîtier.
